# EUROPEAN PATENT SPECIFICATION

(11) **EP 2 273 261 B1**
(45) Date of publication and mention of the grant of the patent: **19.06.2013**
(21) Application number: 09008949.1
(22) Date of filing: 09.07.2009
(51) Int. Cl.: G01N 33/00, G01D 11/24

(54) **Sensor device on a flexible carrier**
Sensorvorrichtung auf einem flexiblen Träger
Dispositif de capteur sur support flexible

(43) Date of publication of application: 12.01.2011
(73) Proprietor: Sensirion AG, 8712 Stäfa (CH)
(72) Inventor: Mayer, Felix, 8712 Stäfa (CH); Bühler, Johannes, 8610 Uster (CH); Wälti, Marc, 8330 Pfäffikon (CH)
(74) Representative: Sutter, Kurt

(56) References cited:
- EP-B1- 1 700 724
- WO-A1-2006/042546
- US-A1- 2002 071 475
- US-A1- 2009 079 423

## Description

### Technical Field

The invention relates to a method for manufacturing sensor devices.

### Background Art

A sensor device of this type is described in EP 1 700 724. It comprises a flexible printed circuit carrier and a sensor chip. The sensor chip is attached to the printed circuit carrier. The sensor device has a package comprising a cap and a glob of self-hardening resin.

To reduce the manufacturing price of this type of sensor device and to make it suitable for a large number of applications, the sensor device should be compact and easy to manufacture.

US 2009/079423 A1 discloses an angle sensor on a rigid plate which is only protected by an encasement body without having a surrounding protective housing.

WO 2006/042546 A1 discloses a humidity sensor comprising a sensor element and a moulding, which preferably consists of a thermoplastic material or a two-component polyurethane, epoxy or silicone casting and which is adapted to adhere to the sensor element. It further comprises a dead-space volume, which is arranged in connection with the sensor element and which is covered by a membrane. The membrane is attached to an external surface of the moulding and is adapted to protect the sensor element from exposure to ambient moisture and dirt and allowing diffusion of ambient air gas molecules, like water vapour, into the dead-space volume.

### Disclosure of the Invention

The problem to be solved by the present invention is therefore to provide a means for manufacturing and providing small, easy to manufacture sensors of this type.

This problem is solved by the method according to the independent claim.

Hence, the method for manufacturing the sensor device comprises the steps:
- A flexible foil for forming flexible printed circuit carriers, and sensor chips are provided. The term "flexible printed circuit carrier" is defined below. The sensor chip may e.g. be a semiconductor chip having a sensor integrated thereon.
- The sensor chips are attached to the flexible foil, e.g. by adhesive bonding.
- The sensor chips are electrically connected to the foil. Such a connection is e.g. formed by connecting the sensor chip to the subject carrier by means of bond wires, but other technologies, such as flip-chip-techniques, could be used as well.
- A mould is placed over the foil, thereby forming a plurality of cavities or one cavity between the mould and the foil. The mould is located such that each sensor chip is arranged in one of the cavities or in the cavity, respectively.
- The cavity or cavities are filled with a hardening filler material, such as a resin. The filler material is hardened at least partially, e.g. by crosslinking and/or cooling.
- The mould is removed after the filler material has been hardened sufficiently.
- The foil is cut into the carriers after removing the mould.

Hence, this procedure allows to combine a substantially conventional semiconductor packaging process with a flexible printed circuit carrier. To do so, basically, the wire frame used in a conventional packaging process is replaced by the flexible printed circuit carrier. This allows to provide a compact, low-cost but well-defined packaging design.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 shows a view of a single sensor device manufactured by the method according to the invention,
Fig. 2 shows a sectional view of the device of Fig. 1,
Fig. 3 shows a flexible foil forming a plurality of the printed circuit carriers,
Fig. 4 shows the foil of Fig. 3 after mounting the sensor chips,
Fig. 5 shows the assembly of Fig. 4 during casting,
Fig. 6 shows an alternative embodiment during casting,
Fig. 7 shows a third embodiment of the sensor device,
Fig. 8 shows the design of a foil to be used with the present invention,
Fig. 9 shows the application of the sensor device of Figs. 1 and 2 in a fogging sensor for vehicles, Fig. 10 shows a design of another foil to be used with the present invention, and
Fig. 11 shows a sectional view of a device with a multi-layer carrier manufactured by the method according to the present invention.

### Modes for Carrying Out the Invention

### Definitions:

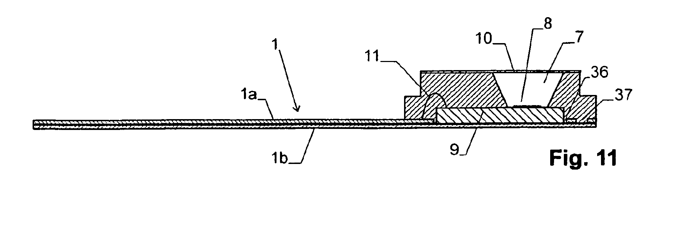

A "flexible printed circuit carrier", also called a "flex circuit", is a flexible carrier carrying conductor lines (runs) on one or both sides, in single or multiple layers. Typically, the carrier is made of a plastic material, such as DuPont's® Kapton® polyimide film of some 10 to some 100 µm thickness. Alternative materials are e.g. PET or LCP. The flexible printed circuit carrier is flexible in the sense that it can be bent to a radius 2 cm or less, in particular 1 cm or less, without being damaged. The flexible printed circuit carrier can comprise a first and a second layer releasably attached to each other, as described in reference to Fig. 11 below.

The term "an integral moulded package" relates to a package that is of a single piece of material obtained in a single moulding process, i.e. a package of a single piece of hardened material, which hardened material was cast into a mould and hardened (at least partially) therein.

### The sensor device:

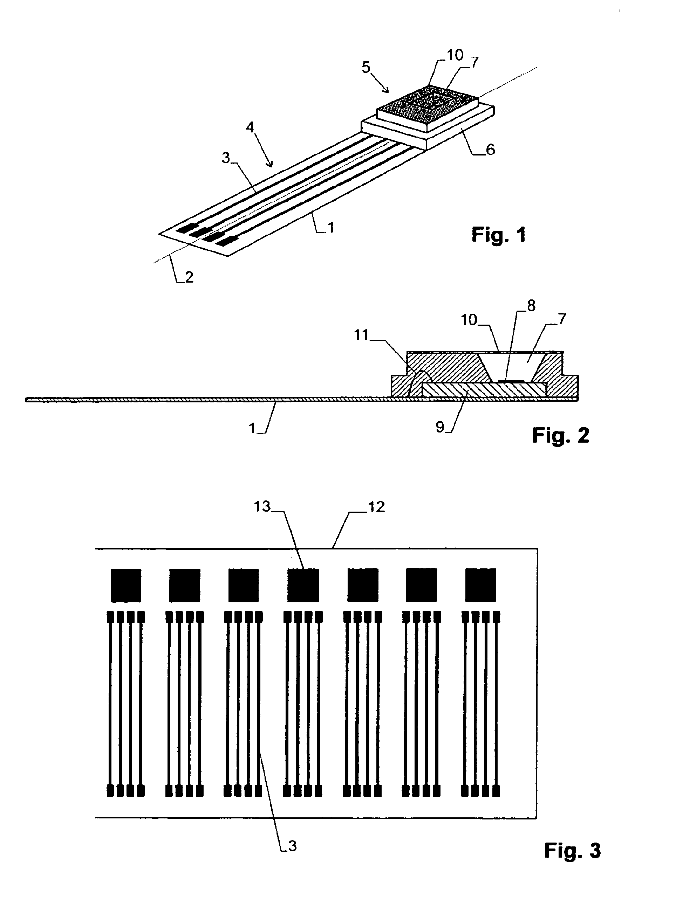

Figs. 1 and 2 show a sensor device manufactured by an embodiment of a method according to the present invention. It comprises an elongate, strip-shaped flexible printed circuit carrier 1 having a longitudinal axis 2. Carrier 1 comprises a tail section 4 and a head section 5. In the embodiment of Fig. 1, both sections have identical width in the direction perpendicular to longitudinal axis 2 but this may be different in other embodiments (see below).

A plurality of electrical leads 3 are arranged on tail section 4 of carrier 1. The leads 3 extend substantially parallel to longitudinal axis 2 of the device.

A package 6 is mounted to head section 5 of carrier 1. Package 6 is a cast package and consists of a single piece of hardened material. A method for manufacturing package 6 is described below.

Package 6 comprises a window 7 providing access to a sensing area 8 of a sensor chip 9. Sensor chip 9 is e.g. a semiconductor substrate or dielectric substrate carrying sensing area 8 and, optionally, further circuitry, such as amplifiers, voltage sources and digital and/or analog processing circuits. Sensing area 8 is the part of the sensor that performs the actual measurement and may e.g. be an area of sensor chip 9 that changes its properties depending on humidity level or, more general, gas composition. A suitable sensor is e.g. disclosed in US 6 690 569.

Bond wires 11 are provided for electrically connecting contact pads on sensor chip 9 with the leads 3 of carrier 1.

Window 7 can optionally be covered by a filter 10 for protecting sensing area 8 and sensor chip 9 from contamination and/or mechanical damage.

### Manufacturing methods

A plurality of the sensor devices is manufactured at the same time. The process described in the following assumes that sensor chip 9 has already been prepared, e.g. using a conventional manufacturing process. It also assumes that a flexible foil 12 as shown in Fig. 3 is provided, with the term "flexible" being defined as for "flexible printed circuit carrier" above. Foil 12 will form a plurality of the flexible printed circuit carriers described above once that it is cut, as described below. For each carrier to be formed later, foil 12 carries the leads 3 as well as a region subsequently called a "die pad" 13.

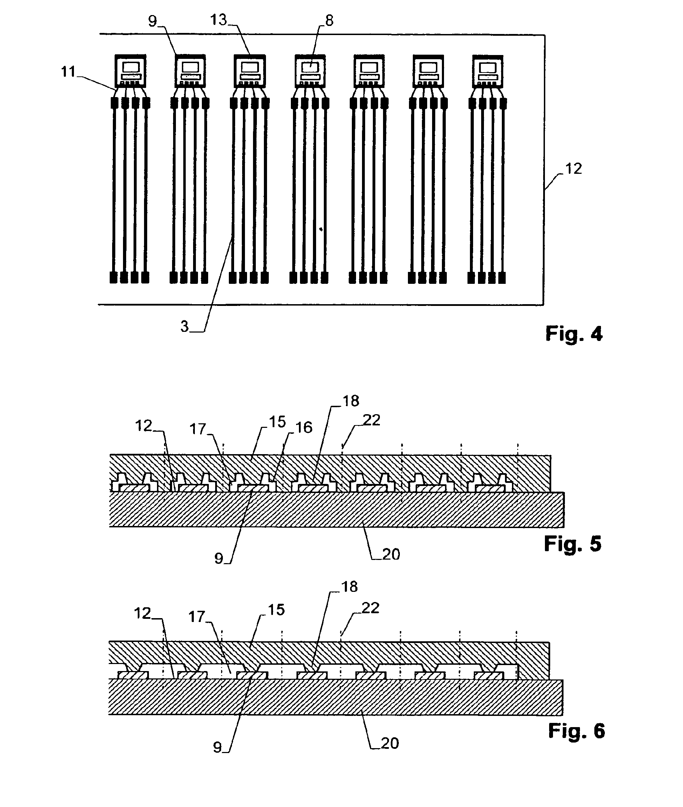

In a next step, as shown in Fig. 4, a sensor chip is attached to each die pad 13, e.g. by adhesive bonding. Then, the bond wires 11 are applied for connecting the contact pads of the sensor chips 9 with the leads 3 on flexible foil 12.

Now, a mould 15 as shown in Fig. 5 is placed over foil 12. Mould 15 has a plurality of recesses 16 in its surface facing foil 12, each one of which forms a cavity 17 between mould 15 and foil 12. In addition, mould 15 comprises a plurality of projections 18, which project into the cavities 17.

As can be seen in Fig. 5, mould 15 is dimensioned and positioned such that each sensor chip 9 comes to lie in one of the cavities 17, and one of the projections 18 abuts against the sensing area 8 of sensor chip 9.

During this process, foil 12 rests against a support surface 20 positioned opposite to mould 15.

In a next step, the cavities 17 are filled with a hardening filler material. During this process, the projections 18 prevent filler material from covering the sensing areas 8 and they serve to form the windows 7. Processes of this type are e.g. described in WO 2008/046235 and WO 2006/114005.

Once that the filler material has been sufficiently hardened, mould 15 is removed. The resulting foil with the packages 6 cast thereon is subsequently cut, e.g. along the lines 22 shown in Figs. 5, into the individual carriers in order to form the individual sensor devices.

Filter 10 can be attached to package 6 after removing the mould, e.g. by means of adhesive bonding, ultrasonic welding or laser welding, either before or after cutting foil 12.

### Other embodiments

In the embodiment shown in Fig. 5, a plurality of cavities 17 is formed between mould 15 and foil 12. Fig. 6 shows an alternative embodiment, where one single cavity 17 for receiving all sensor chips 9 is formed between mould 15 and foil 12. In this case, after removing the mould and, optionally, applying the filter 10, the hardened filler material has to be cut in order to form the packages of the individual sensor devices, e.g. along the lines 22 of Fig. 6.

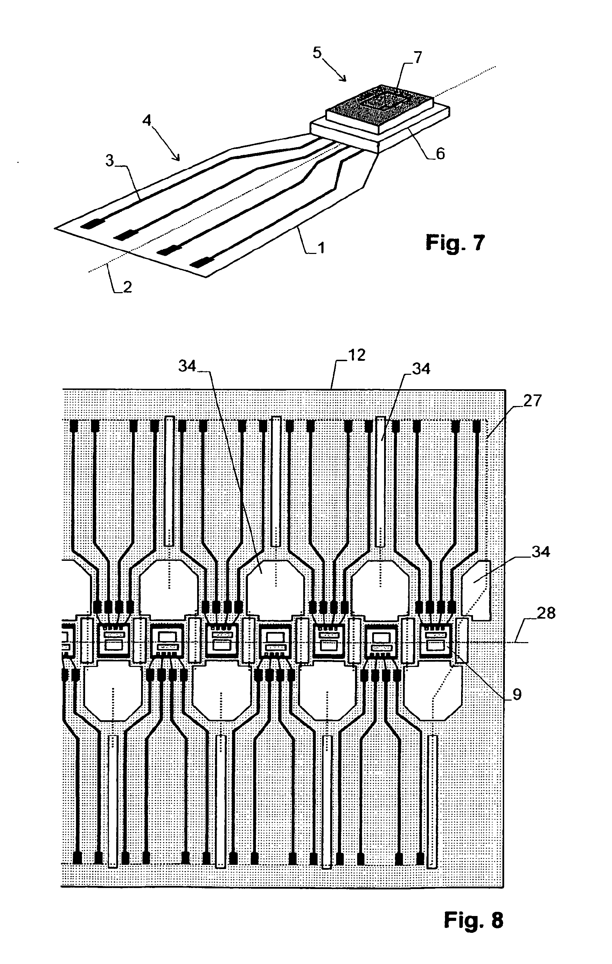

As mentioned, in the embodiment of Fig. 1, carrier 1 is of constant width along its whole length. However, to make it easier to connect the sensor device to external circuitry, it may be advantageous to space the tail ends of the leads 3 further apart than their head ends, as it is shown in the embodiment of the sensor device of Fig. 7. In this case, tail section 4 of carrier 1 is, in the direction perpendicular to longitudinal axis 2, wider than head section 5. The leads 3, which still extend from the head section 5 into and along the tail section 4, are closer together in the head section 5 than in the tail section 4.

To manufacture a sensor device of the type of Fig. 7, a foil 12 as shown in Fig. 8 can be used. As in the embodiment of Fig. 3, the foil forms a plurality of carriers 1 arranged in a row. However, in contrast to Fig. 3, the carriers on foil 12 of Fig. 8 are arranged with the longitudinal axes being anti-parallel to each other such that the tail sections of the even carriers come to lie on a first side and the tail sections of the odd carrier comes to lie on a second side of a line 28 interconnecting the head sections of all carriers.

The embodiment of Fig. 8 further illustrates that foil 12 can be pre-cut, e.g. prior to the application of the chips 9, to comprise cut-out portions 34, e.g. in order to simplify a later cutting of the foil when separating the individual devices. Such cut-out portions may also be used with one of the other embodiments shown herein.

To better illustrate the positions of the cut-out portions 34, foil 12 of Fig. 8 has been filled with a dotted pattern.

After casting the package 6 and removing the mould, foil 12 is cut to form the individual sensor devices, e.g. along the dotted cutting lines as indicated by reference number 27.

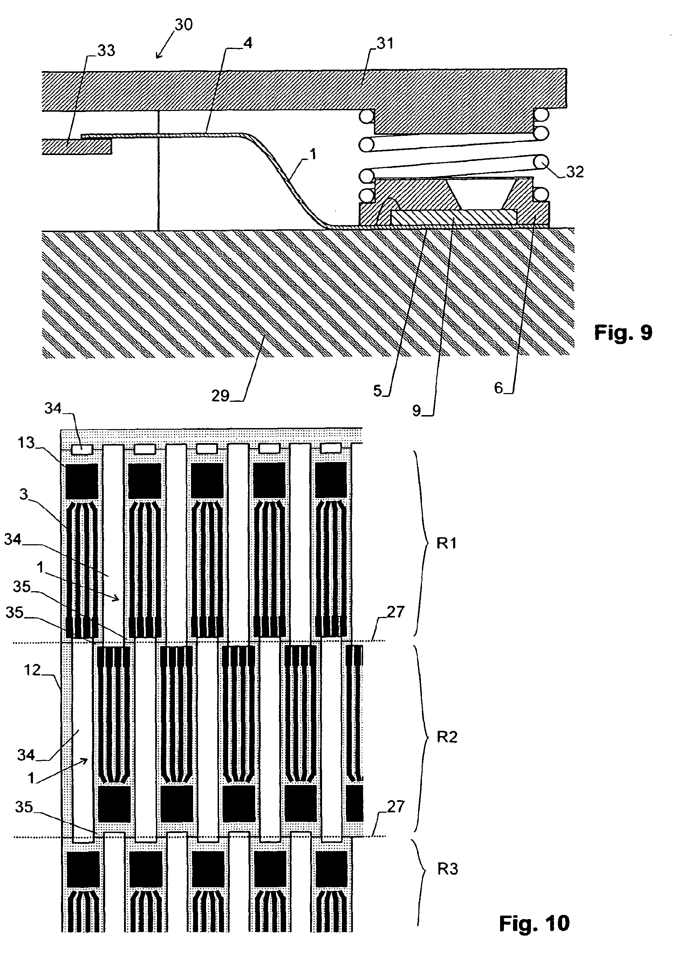

Fig. 10 shows yet another design of foil 12. Similar to the embodiment of Fig. 8, the foil according to this design comprises cut-out portions 34 to simplify the cutting of the foil when separating the individual devices. In contrast to the embodiment of Fig. 8, though, the dotted cutting lines 27 are straight, which makes cutting even easier. This is achieved by arranging the carries 1 of the devices in several rows on foil 12, with the rows in Fig. 10 being designated by R1, R2, ... The tail sections of the carries (1) extend perpendicular to the rows R1, R2, ... The carriers 1 are interconnected by webs 35, with the webs 35 extending between neighbouring rows R1, R2, R3 and transversally to the rows. In addition, each carrier 1 of a given row is at least connected by a first web to a first carrier and a second web to a second carrier of a neighbouring row. However, the carriers of any given row are not interconnected but, rather, separated from each other by gaps 34 or cuts. Thus, when severing the webs along the cutting lines 27 (which extend parallel to the rows), the carriers 1 can be separated.

In the embodiments shown so far, carrier 1 consisted of a single foil layer carrying printed circuit leads. In an alternative embodiment, as shown in Fig. 11, carrier 1 can consist of a multilayer-structure with a first foil layer 1a carrying the printed circuit leads as well as a second foil layer 1b laminated to first foil layer 1a in a manner that allows a later separation of the foil layers 1a and 1b. As it can further be seen in Fig. 11, first foil layer 1a has at least a first opening 36 at the location of sensor chip 9. During manufacturing, sensor chip 9 is placed in opening 36 and is (temporarily) attached to second foil layer 1b. Thereafter, mould 15 is placed over carrier 1 and the cavity between carrier 1 and mould 15 is filed with the filler material. When the filler material has hardened, second foil layer 1b is removed. Removal of second foil layer 1b can take place before or after removing mould 15, and it can also take place before or after separating foil 12 into the individual carriers 1.

Hence, the final device is used without foil layer 1b, and sensor chip 9 therefore forms the bottom of the device. This is advantageous because sensor chip 9 can therefore be brought into direct thermal contact with the underlying support, such as the window 29 described in the next section.

Fig. 11 further shows that first foil layer 1a can comprise at least one second opening 37 positioned to be filled with the filler material. Providing one or more of such second openings 37 has the advantage that first foil layer 1a is more reliably joined to final package 6.

### Application

One possible application of the sensor device manufactured according to the present invention is shown in Fig. 9. This device, which is a fogging sensor for detecting fogging on the window 29 of a vehicle, comprises a sensor chip 9 designed as a humidity sensor. It has basically a design as shown in EP 1 700 724 with a holder 30 mounted to window 29, e.g. by adhesive bonding. Holder 30 has an arm 31 located at a distance from window 29. Package 6 of the sensor device is located between arm 31 and window 29, with an elastically compressed spring 32 being arranged between arm 31 and package 6. Spring 32 pushes package 6 against window 29. Head section 5 of carrier 1 is arranged between package 6 and window 29, and tail section 4 extends to a printed circuit board 33 in holder 30.

It must be noted, though, that the present sensing device can also be used in a variety of other sensing applications, such as for pressure sensing, flow sensing or gas sensing.

## Claims

1. A method for manufacturing sensor devices comprising the steps of
providing a flexible foil forming a plurality of flexible printed circuit carriers (1),
attaching a plurality of sensor chips (9) to said flexible foil, with each sensor chip (9) being attributed to one carrier (1),
electrically connecting said sensor chips (9) to said foil,
placing a mould (15) over said foil, thereby forming a plurality of cavities (17), or one cavity (17), between said mould (15) and said foil, with each sensor chip (9) being arranged in one of said cavities (17) or said cavity (17), respectively,
filling said cavity (17) or cavities (17) with a filler material and hardening said filler material for forming packages (6) for said sensor devices,
removing said mould (15) after hardening said filler material, and
cutting said foil into said carriers (1) after removing said mould (15).

2. The method of claim 1, wherein said mould (15) comprises projections (18) projecting into said cavity (17) or cavities (17) and abutting against sensing areas (8) of said sensor chips (9) while filling said cavity (17), thereby preventing said filler material from covering said sensing areas (8).

3. The method of claim 1, wherein each carrier (1) is an elongate strip having a longitudinal axis (2) and comprises a head section (5) and a tail section (4), with the package (6) being cast against said head section (5).

4. The method of claim 3, wherein in a direction perpendicular to said longitudinal axis (2), said tail section (4) is wider than said head section (5), and wherein a series of said carriers (1) is arranged in a row on said foil, with the longitudinal axes of neighbouring carriers (1) being anti-parallel to each other such that the tail sections (4) of even carriers come to lie on a first side and the tail sections (4) of odd carrier comes to lie on a second side of a line (28) interconnecting the head sections (5) of all carriers (1).

5. The method of any of the claims 1, 3, 4, wherein the carriers (1) are arranged in rows (R1, R2, ...), with webs (35) of said foil (12) interconnecting carriers (1) of neighbouring rows (R1, R2, ...), the carriers (1) of any given row are not interconnected but separate from each other, and wherein said method comprises the step of cutting said foil (12) along lines (27) extending parallel to said rows (R1, R2, ...), thereby separating said carriers (1).

6. The method of any of the preceding claims comprising the step of attaching a filter (10) to said sensor after removing said mould (15).

7. The method of any of the preceding claims wherein said flexible printed circuit carrier comprises a first foil layer (1a) and a second foil layer (1b), wherein second foil layer (1b) is laminated to first foil (1a), and wherein first foil layer (1a) carries printed circuit leads and comprises at least a first opening (36), said method comprising the step of
placing said sensor chip (9) in said first opening (36) and,
after hardening said filler material, removing said second foil layer (1b).

8. The method of claim 7 wherein said first foil layer (1a) comprises at least one second opening (37) and wherein said method comprises the step of filling said second opening (37) with said filter material.

## Patentansprüche

1. Ein Verfahren zur Herstellung von Sensorvorrichtungen, umfassend die Schritte:
- Bereitstellen einer flexiblen Folie die eine Vielzahl von flexiblen, bedruckten Schaltungsträgern (1) bildet,
- Befestigen einer Vielzahl von Sensorchips (9) an die flexible Folie, wobei jeder Sensorchip (9) einem Träger (1) zugeordnet ist,
- elektrisches Verbinden der Sensorchips (9) an die Folie,
- Positionieren einer Form (15) über der Folie, wobei dadurch eine Vielzahl von Aussparungen (17) oder eine Aussparung (17) zwischen der Form (15) und der Folie gebildet wird, wobei jeder Sensorchip (9) in eine der Aussparungen (17) bzw. in die Aussparung (17) angeordnet wird,
- Füllen der Aussparung (17) oder der Aussparungen (17) mit einem Füllmaterial und Härten des Füllmaterials zur Bildung von Gehäusen (6) für die Sensorvorrichtungen,
- Entfernen der Form (15) nach dem Härten des Füllmaterials, und
- Schneiden der Folie in die Träger (1) nach dem Entfernen der Form (15).

2. Das Verfahren nach Anspruch 1, wobei die Form (15) Vorsprünge (18) umfasst, die sich in die Aussparung (17) oder Aussparungen (17) erstrecken und die an Sensorenflächen (8) der Sensorchips (9) angrenzen, während die Aussparung (17) gefüllt wird, wodurch vermieden wird, dass das Füllmaterial die Sensorflächen bedeckt.

3. Das Verfahren nach Anspruch 1, wobei jeder Träger (1) eine länglicher Streifen ist, der eine longitudinale Achse (2) hat und einen Kopfbereich (5) und einen Endbereich (4) umfasst, wobei das Gehäuse zum Kopfbereich hin gegossen wird.

4. Das Verfahren nach Anspruch 3, wobei der Endbereich (4) in einer zur longitudinalen Achse senkrechten Richtung breiter als der Kopfbereich (5) ist und wobei eine Serie von Trägern (1) in einer Reihe auf der Folie angeordnet ist, wobei die longitudinalen Achsen der benachbarten Träger (1) anti-parallel zueinander sind, derart, dass die Endbereiche (4) gerader Träger auf einer ersten Seite und die Endbereiche (4) ungerader Träger auf einer zweiten Seite einer Linie (28), die die Kopfbereiche (5) aller Träger verbindet, zu liegen kommen.

5. Das Verfahren nach einem der Ansprüche 1, 3, 4, wobei die Träger (1) in Reihen (R1, R2, ...) angeordnet sind, mit Bahnen (35) der Folie (12), die Träger (1) benachbarter Reihen (R1, R2, ...) verbinden, wobei die Träger (1) einer beliebigen Reihe nicht miteinander verbunden sondern getrennt voneinander sind, und wobei das Verfahren den Schritt des Schneidens der Folie (12) entlang von Linien (27), die sich parallel zu den Reihen (R1, R2, ...) erstrecken, umfasst, wodurch die Träger (1) getrennt werden.

6. Das Verfahren nach einem der vorangehenden Ansprüche, umfassend den Schritt der Befestigung eines Filters (10) an den Sensor, nachdem die Form (15) entfernt wurde.

7. Das Verfahren nach einem der vorangehenden Ansprüche, wobei der flexible, bedruckte Schaltungsträger eine erste Folienschicht (1a) und eine zweite Folienschicht (1b) umfasst, wobei die zweite Folienschicht (1b) an der ersten Folienschicht (1a) laminiert ist, und wobei die erste Folienschicht (1a) bedruckte Schaltungsleitungen trägt und mindestens eine erste Öffnung (36) umfasst, wobei das Verfahren die Schritte umfasst:
- Platzieren des Sensorchips (9) in die erste Öffnung (36), und
- Entfernen der zweiten Folienschicht (1b) nach dem Härten des Füllmaterials.

8. Das Verfahren nach Anspruch 7, wobei die erste Folienschicht (1a) mindestens eine zweite Öffnung (37) umfasst und wobei das Verfahren den Schritt des Füllens der zweiten Öffnung (37) mit dem Füllmaterial umfasst.

## Revendications

1. Un procédé pour la fabrication des dispositifs capteur, comprenant les étapes de:
- prévoir un film flexible qui forme une pluralité des supports de circuit flexibles (1) imprimés,
- attacher une pluralité des puces de capteur (9) audit film flexible, chaque puce de capteur (9) étant attribuée à un support (1),
- connecter électriquement lesdites puces de capteur (9) audit film,
- placer un moule (15) au dessus dudit film, ainsi formant une pluralité des niches (17), ou une niche (17), entre ledit moule (15) et ledit film, chaque puce de capteur (9) étant arrangée dans une desdites niches (17) ou bien de ladite niche (17),
- remplir ladite niche (17) ou lesdites niches (17) avec un matériau de remplissage et durcir ledit matériau de remplissage afin de former des carcasses (6) pour lesdits dispositifs capteur,
- enlever ledit moule (15) après le durcissement dudit matériau de remplissage, et
- couper ledit film dans lesdits supports (1) après avoir enlever ledit moule (15).

2. Le procédé selon la revendication 1, ledit moule (15) comprenant des projectures (18) qui font saille dans ladite niche (17) ou lesdites niches (17) et qui sont contiguës à des surfaces de détection (8) desdites puces de capteur (9) pendant le remplissage de ladite niche (17), ainsi évitant une couverture desdites surfaces de détection (8) par ledit matériau de remplissage.

3. Le procédé selon la revendication 1, chaque support (1) étant une bande oblongue ayant un axe longitudinal (2) et comprenant une partie tête (5) et une partie d'extrémité (4), la carcasse (6) étant coulée vers ladite partie tête (5).

4. Le procédé selon la revendication 3, ladite partie d'extrémité (4) étant plus large que ladite partie tête (5) dans une direction perpendiculaire audit axe longitudinal (2), et une série desdits supports (1) étant arrangée dans une ligne sur ledit film, les axes longitudinaux des supports (1) voisins étant antiparallèles l'un par rapport à l'autre, de manière que les parties d'extrémité (4) des supports paires se posent d'un premier côté et les parties d'extrémité (4) des supports impaires se posent d'un deuxième côté d'une ligne (28), connectant les parties tête (5) de tous les supports (1) l'une avec l'autre.

5. Le procédé selon l'une des revendications 1, 3, 4, les supports (1) étant arrangés en lignes (R1, R2, ...), avec des bandes (35) dudit film (12) connectant des supports (1) des lignes (R1, R2, ...) voisines l'un avec l'autre, les supports (1) d'une ligne arbitraire n'étant pas connectés l'un avec l'autre mais étant séparés l'un de l'autre, et ledit procédé comprenant l'étape de couper ledit film (12) le long des lignes (27) parallèles auxdites lignes (R1, R2, ...), ainsi séparant lesdits supports (1).

6. Le procédé selon l'une des revendications précédentes, comprenant l'étape d'attacher un filtre (10) audit capteur après avoir enlevé ledit moule (15).

7. Le procédé selon l'une des revendications précédentes, ledit support flexible de circuit imprimé comprenant une première couche de film (1a) et une deuxième couche de film (1b), la deuxième couche de film (1b) étant laminée à la première couche de film (1a), et la première couche de film (1b) portant des fils de circuit imprimés et comprenant au moins une première ouverture (36), ledit procédé comprenant l'étape de :
- placer ladite puce de capteur (9) dans ladite première ouverture (36), et
- enlever ladite deuxième couche de film (1b) après le durcissement dudit matériau de remplissage.

8. Le procédé selon la revendication 7, ladite première couche de film (1a) comprenant au moins une deuxième ouverture (37) et ledit procédé comprenant l'étape de remplir ladite deuxième ouverture (37) avec ledit matériau de remplissage.
